# EUROPÄISCHE PATENTANMELDUNG

(11) **EP 0 818 300 A1**
(43) Veröffentlichungstag der Anmeldung: **14.01.1998**
(21) Anmeldenummer: 97111678.5
(22) Anmeldetag: 09.07.1997
(51) Int. Cl.: B29C 49/48, B29C 49/42, B29C 33/00, B29C 31/08, B29C 33/12, B29L 23/18

(54) **Verfahren und Vorrichtung zum Vermeiden des vorzeitigen Abkühlens von extrudierten Vorformlingen während dem Einlegen in ein Blasformwerkzeug**

(30) Priorität: 10.07.1996 DE 19627834
(71) Anmelder: Solvay Automotive GmbH, 38667 Bad Harzburg (DE)
(72) Erfinder: Bonacker, Jörg, Dipl.-Ing. Maschinenbau, 38667 Bad Harzburg (DE)
(74) Vertreter: Müller-Boré & Partner Patentanwälte

(57) **Zusammenfassung**

Bei einem Verfahren zum Blasformen eines sich zumindest abschnittsweise im wesentlichen horizontal in einer Blasform (1) erstreckenden, noch extrusionswarmen Vorformlings (4) wird der Vorformling (4) in die geöffnete Blasform (1) eingelegt, die Blasform durch Aufeinanderzufahren ihrer Formteile (23) geschlossen, der Vorformling (4) innerhalb der Blasform (1) aufgeblasen, die Blasform (1) durch Auseinanderfahren ihrer Formteile (2,3) geöffnet und der fertige Formkörper (5) entnommen, wobei der Vorformling (4) während des Einlegens und des Schließens der Blasform (1) von der Wandung der Blasform (1) beabstandet gehalten wird, bis die Blasform (1) geschlossen ist. Eine Blasform (1), die zur Durchführung dieses Verfahrens geeignet ist, besitzt einen ersten Formteil (2) und einen zweiten Formteil (2), die jeweils mit einem Formungsabschnitt (20,30) versehen sind und die jeweils eine Teilungsfläche (21,31) aufweisen, wobei die Teilungsflächen (21,31) angeordnet sind, um einander im geschlossenen Zustand der Blasform (1) zu berühren, und Bewegungs- und Haltemittel, um die Formteile zwischen einer geöffneten Stellung der Blasform und der geschlossenen Stellung zu verfahren und in der geschlossenen Stellung gegeneinander zu halten, wobei in zumindest einem Formteil (2) im Bereich des Formungsabschnitts wenigstens ein im wesentlichen quer zur Teilungsebene verfahrbares Stützelement für den Vorformling vorgesehen ist.

## Beschreibung

Die Erfindung betrifft ein Verfahren zum Blasformen eines sich zumindest abschnittsweise im wesentlichen horizontal in einer Blasform erstreckenden, noch extrusionswarmen Vorformlings und einer Blasform zur Durchführung des Verfahrens.

Extrudierte Rohre oder Schläuche aus Kunststoff werden häufig durch Blasformen weiterverarbeitet. Beispielsweise werden auf diese Art Lüftungs- und Heizungsschläuche für Heizungs- und Klimaanlagen in Kraftfahrzeugen hergestellt. Dazu wird der extrudierte Kunststoffschlauch mittels einer Verlegevorrichtung in eine Blasform eingelegt und anschließend durch Einblasen von Luft in die durch die Blasform vorgegebene Form gebracht.

Ein Problem hierbei liegt darin, daß der noch extrusionswarme Vorformling, wahrend er in der Blasform liegt, bis zum Beginn des Blasvorgangs soweit abgekühlt ist, daß er nur noch geringfügig aufgeblasen werden kann. Sollen größere Formveränderungen im Bereich der Wandung des Formkörpers mittels des Blasformens erzielt werden, so muß der entsprechende Formte zumindest in diesem Bereich beheizt werden, was durch die Größe der Blasform im allgemeinen einen hohen Energieverbrauch bedingt.

Es ist daher die Aufgabe der vorliegenden Erfindung, ein gattungsgemäßes Verfahren zum Blasformen anzugeben, das es gestattet, ohne zusätzliche Beheizung der Blasform eine zuverlässige Blasformung des Vorformlings auch dann durchzuführen, wenn umfangreichere Verformungen erforderlich sind. Eine weitere Aufgabe ist es, eine Blasform anzugeben, die die Durchführung eines derartigen Blasformverfahrens ermöglicht.

Der erste Teil der Aufgabe wird gemäß Anspruch 1 durch ein gattungsgemäßes Verfahren gelöst, bei dem der Vorformling in die geöffnete Blasform eingelegt wird, die Blasform durch Aufeinanderzufahren ihrer Formteile geschlossen wird, der Vorformling innerhalb der Blasform aufgeblasen wird, die Blasform durch Auseinanderfahren ihrer Formteile geöffnet wird und der fertige Formkörper entnommen wird, wobei der Vorformling während des Einlegens und des Schließens der Blasform von der Wandung der Blasform beabstandet gehalten wird, bis die Blasform geschlossen ist.

Dadurch, daß der noch extrusionswarme Vorformling, der eine Temperatur von beispielsweise 200° bis 300° C aufweist, bis zum Schließen der Blasform, also bis kurz vor Beginn des Blasformvorgangs, von der Wandung der wesentlich kühleren Blasform, die beispielsweise eine Temperatur von 80° C aufweist, beabstandet gehalten wird, wird die Wärmeabgabe vom Vorformling an die Blasform wesentlich reduziert, so daß der Vorformling während des Blasformvorgangs eine wesentlich höhere Temperatur besitzt als in jenem Fall, in dem der Vorformling direkt auf die Wandung der Blasform gelegt wird und dort durch Wärmeleitung seine Restwärme vom Extrusionsvorgang an die Blasform abgibt.

Der die Blasform betreffende Teil der Aufgabe wird gemäß Anspruch 2 gelöst von einer Blasform mit einem ersten Formteil und einem zweiten Formteil, die jeweils mit einem Formungsabschnitt versehen sind und die jeweils eine Teilungsfläche aufweisen, wobei die Teilungsflächen angeordnet sind, um einander im geschlossenen Zustand der Blasform zu berühren, und Bewegungs- und Haltemitteln, um die Formteile zwischen einer geöffneten Stellung der Blasform und der geschlossenen Stellung zu verfahren und in der geschlossenen Stellung gegeneinander zu halten, wobei in zumindest einem Formteil im Bereich des Formungsabschnitts wenigstens ein im wesentlichen quer zur Teilungsebene verfahrbares Stützelement für den Vorformling vorgesehen ist.

Dieses Stützelement, das bevorzugt im unteren Formteil vorgesehen ist, stützt den Vorformling auf einfache Weise ab und verhindert, daß dieser bereits beim Einlegen in die Blasform in unmittelbarem Kontakt mit der Wandung der Blasform gerät. Auf diese Weise wird die Wärmeabgabe des Vorformlings an die Blasform wesentlich reduziert. Das Stützelement ist im wesentlichen quer zur Teilungsebene verfahrbar, um beim Schließen der Blasform oder nach dem Schließen der Blasform den Formquerschnitt im Bereich der Formungsabschnitte freigeben zu können, so daß das Stützelement den eigentlichen Blasformvorgang nicht behindert.

Besonders vorteilhaft ist es, wenn das wenigstens eine Stützelement zumindest im Bereich seiner Abstützfläche für den Vorformling aus wärmeisolierendem Material besteht. Hierdurch wird die Wärmeableitung aus dem Vorformling noch weiter reduziert.

Ist das wenigstens eine Stützelement im zugehörigen Formteil federnd gelagert, so wird bewirkt, daß das Stützelement im offenen Zustand der Blasform stets ausgefahren ist und so automatisch in eine Aufnahmeposition für einen einzulegenden Vorformling gebracht ist.

Vorteilhaft ist auch, wenn das wenigstens eine Stützelement Betätigungsflächen aufweist, die zum Eingriff mit dem anderen Formteil ausgebildet sind, um das Stützelement beim Schließen der Blasform in eine zugehörige Ausnehmung im das Stützelement aufweisenden Formteil zu verfahren. Diese Konstruktion gestattet es, das Stützelement automatisch beim Schließen der Blasform zu betätigen und in seine versenkte Ruheposition zu verfahren, in der das Stützeement im zugehörigen Formteil zurückgezogen ist und den Formquerschnitt im Bereich der Formungsabschnitte nicht einengt.

Alternativ dazu kann das wenigstens eine Stützelement hydraulisch oder pneumatisch oder auch mechanisch oder elektromechanisch in eine Ausnehmung im zugehörigen Formteil verfahrbar sein. Diese Betätigungsmöglichkeiten gestatten es, das Stützelement unabhängig von Schließvorgang der Blasform zu betätigen und somit zu steuern. Bei den vorgenannten Betätigungsmöglichkeiten kann auch das Ausfahren der Stützelemente hydraulisch, pneumatisch, mechanisch oder elektromechanisch erfolgen, wobei aber auch die Federn der federnden Lagerung des Stützelements das Ausfahren des Stützelements bewirken können.

Vorzugsweise ist eine Mehrzahl von Stützelementen vorgesehen, die in Längsrichtung der Formungsfläche voneinander beabstandet sind. Die Abstände zwischen zwei benachbarten Stützelementen sind dabei bevorzugt so bemessen, daß ein Durchhängen des noch extrusionswarmen Vorformlings bis auf den unter ihm gelegenen Formungsabschnitt und damit eine unerwünschte unmittelbare Berührung des Vorformlings mit dem Formungsabschnitt verhindert ist.

Bevorzugt können bei der erfindungsgemäßen Blasform Heizmittel vorgesehen sein, um zumindest einen Formteil zumindest im Bereich eines Teils des Formungsabschnitts zu beheizen, der für eine besondere Verformung des Vorformlings ausgebildet ist. Diese Ausgestaltung ist dann vorteilhaft, wenn in einem besonderen Bereich des Vorformlings eine Verformung während des Blasformvorgangs erfolgen soll, die merklich größer ist als die Verformung im Bereich des restlichen Vorformlings. Dies kann beispielsweise dort erforderlich sein, wo starke Querschnittsvergrößerungen oder parzielle Querschnittsvergrößerungen des späteren Formkörpers gewünscht sind.

In einer besonders vorteilhaften Ausgestaltung ist das jeweilige Stützelement als im wesentlichen U-förmiger Auflagesteg ausgebildet. Hierdurch wird eine gleichmäßige Abstützung des Vorformlings im Auflagebereich gewährleistet. Es sind aber auch andere Formen des Stützelements denkbar, wie beispielsweise eine Mehrzahl von im wesentlichen quer zur Teilungsebene verfahrbaren Stütznadeln oder Stützstäben, die mit ihrem jeweiligen einen Endabschnitt den Vorformling abstützen.

Die Erfindung wird nachfolgend anhand eines Beispiels unter Bezugnahme auf die Zeichnung näher erläutert. In dieser zeigt:
- Fig. 1: eine Draufsicht auf einen herzustellenden Formkörper;
- Fig. 2: eine Draufsicht auf einen ersten Formteil einer Blasform mit eingelegtem Vorformling;
- Fig. 3: eine geschnittene Teildarstellung der Blasform mit eingelegtem Vorformling entlang der Linie III-III in Fig. 2;
- Fig. 4: eine Schnittansicht der Blasform mit eingelegtem Formkörper entlang der Linie IV-IV in Fig. 3 bei geöffneter Blasform;
- Fig. 5: die Schnittansicht aus Fig. 4 bei geschlossener Blasform; und
- Fig. 6: die Schnittansicht gemäß Fig. 5 bei aufgeblasenem Formkörper.

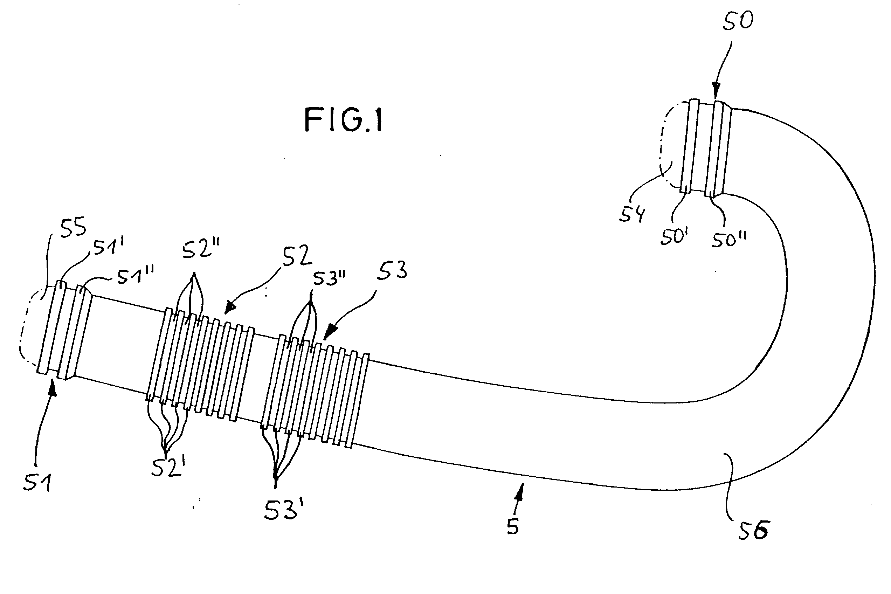

In Fig. 1 ist ein fertiger Formkörper 5 dargestellt, wie er nach dem erfindungsgemäßen Verfahren hergestellt wird. Der Formkörper 5 weist an seinen Enden 50, 51 jeweils mehrere besonders ausgeformte Abschnitte 50', 50'', 51', 51'' mit gegenüber dem Hauptabschnitt 56 des Formkörpers 5 vergrößertem Durchmesser auf. Strichpunktiert dargestellt sind in Fig. 1 im Bereich der Enden 50, 51 des Formkörpers 5 Butzen 54, 55, die beim Blasformen entstehen und nach Beendigung des Blasformvorgangs abgeschnitten werden, um den rohrförmigen Formkörper 5 an seinen Enden zu öffnen.

Der Formkörper 5 weist weiterhin im Bereich seines Hauptabschnitts 56 in der Nähe des einen Endes 51 zwei einander benachbart gelegene flexible Abschnitte 52, 53 auf, die jeweils eine Mehrzahl von in Längsrichtung des Formkörpers 5 hintereinander gelegenen Abschnitte 52', 53' mit vergrößertem Durchmesser sowie zwischen diesen Abschnitten gelegene weitere Abschnitte 52'', 53'' mit kleinerem Durchmesser umfaßt. Durch diese abwechselnde Anordnung wird jeweils eine faltenbalgartiger oder ziehharmonikaartiger flexibler Abschnitt 52, 53 geschaffen, der ein elastisches Verbiegen des Formkörpers 5 gestattet, was beispielsweise den Einbau des in Fig. 1 dargestellten rohrförmigen Formkörpers 5 in ein Heizungssystem eines Kraftfahrzeugs vorteilhaft vereinfacht.

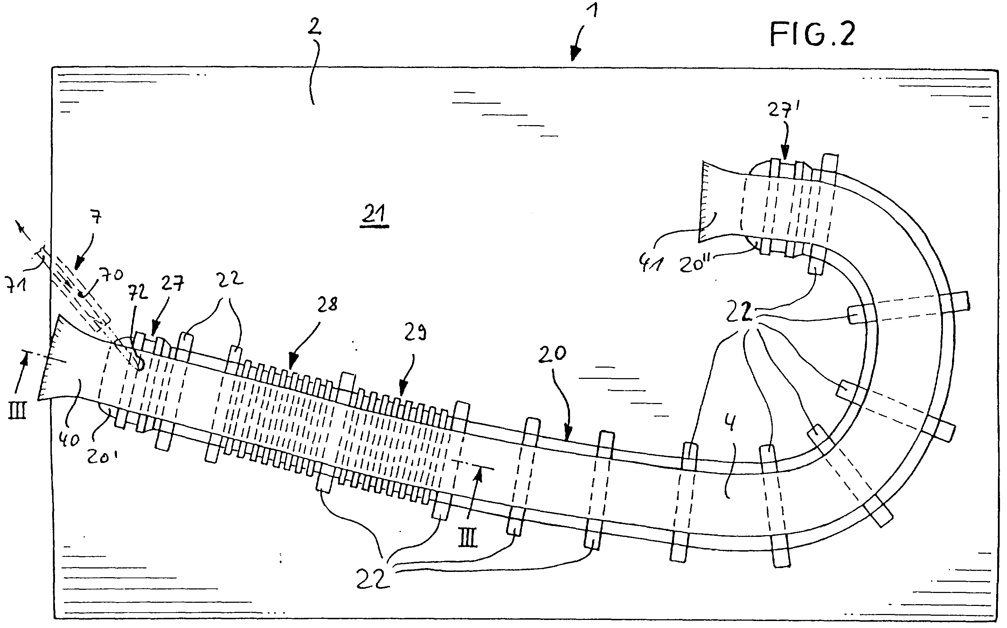

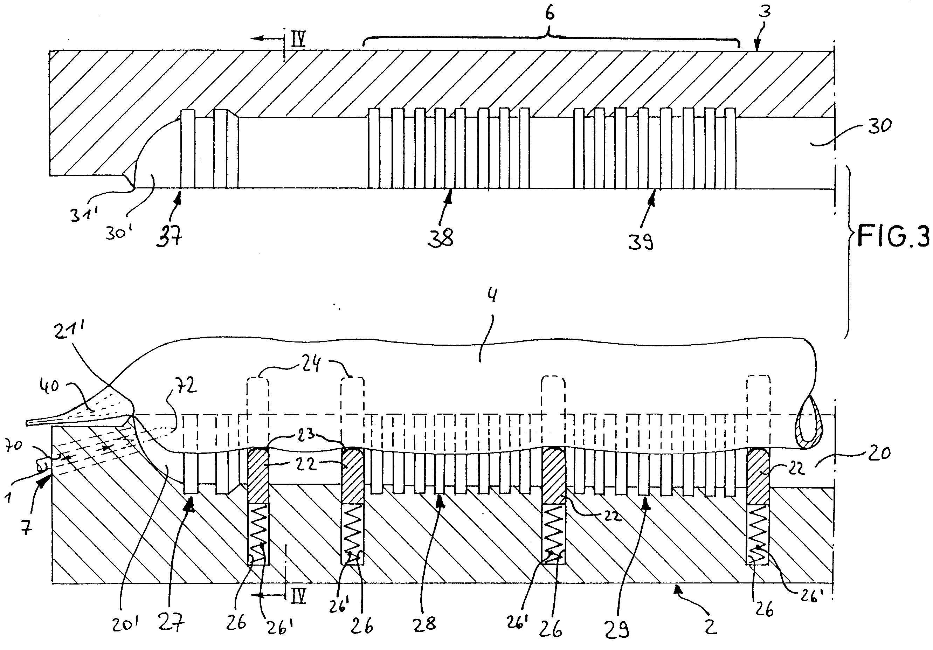

Fig. 2 zeigt die Draufsicht auf einen ersten, unteren Formteil 2 einer Blasform 1. In die in Fig. 2 zum Betrachter hin weisende Teilungsfläche 21 des ersten Formteils 2 ist ein Formungsabschnitt 20 eingearbeitet, der die Negativkontur der unteren Hälfte des zu bildenden Formkörpers 5 bildet, wie auch in Fig. 3 zu sehen ist. Die obere Hälfte des zu bildenden Formkörpers 5 ist als Negativform im Formungsabschnitt 30 des zweiten oberen Formteils 3 ausgebildet (siehe Fig. 3).

Im unteren Formteil 2 und im oberen Formteil 3 sind jeweils Formungsabschnitts-Bereiche 27, 28, 29; 37, 38, 39 vorgesehen, von denen die Bereiche 27 und 37 der Ausbildung der Umfangskontur des einen Endes 51 des Formkörpers 5 dienen und von denen die Formungsabschnitts-Bereiche 28 und 38 sowie 29 und 39 der Bildung der flexiblen Abschnitte 52 bzw. 53 des Formkörpers 5 dienen. Das andere Ende 50 des Formkörpers 5 wird zur einen Hälfte in einem besonderen Bereich 27' des Formungsabschnitts 20 gebildet, der mit einem entsprechenden (nicht dargestellten) Bereich im Formungsabschnitt 30 zusammenwirkt.

Die besonderen Bereiche 27, 27', 28, 29, 37, 38, 39 weisen jeweils in Längsrichtung des zugehörigen Formungsabschnitts 20, 30 voneinander beabstandete Umfangsnuten mit größerem Durchmesser auf, die der Bildung der Abschnitte 52' bzw. 53' des Formkörpers 5 dienen.

In Fig. 2 ist weiterhin ein mittels einer nicht gezeigten Verlegevorrichtung in den Formungsabschnitt 20 des unteren Formteils 2 eingelegter Vorformling 4 dargestellt, der - wie am besten in Fig. 3 zu sehen ist - auf Stützelementen 22 ruht.

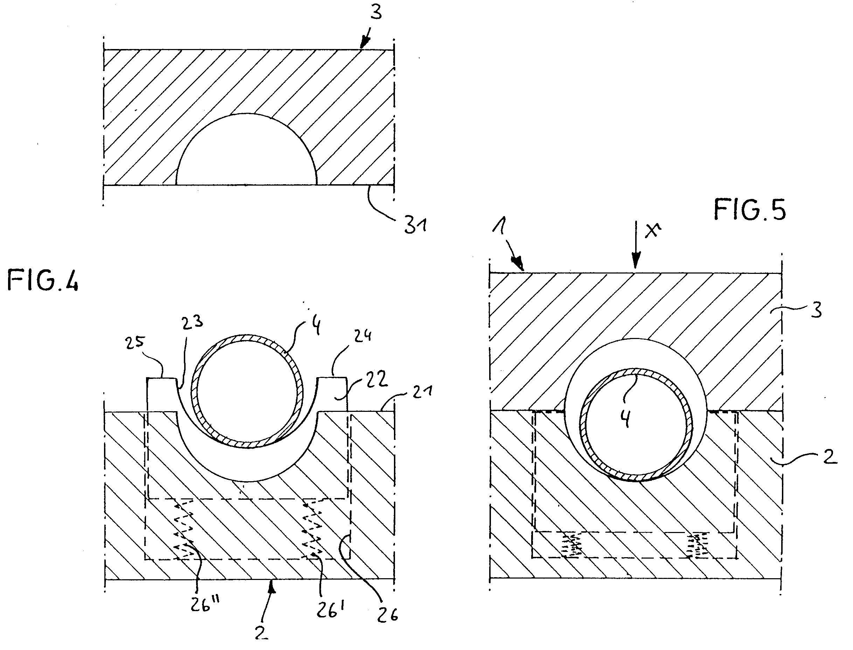

Die Stützelemente 22 sind in Längsrichtung des Formungsabschnitts 20 des unteren Formteils 2 voneinander beabstandet vorgesehen und erstrecken sich im dargestellten Beispiel im wesentlichen rechtwinklig zur Ebene der Teilungsfläche 21 des unteren Formteils 2. Die Stützelemente 22 sind jeweils quer zur Teilungsebene 21, also in ihrer Erstreckungsebene, in entsprechend ausgebildete Ausnehmungen 26 im unteren Formteil 2 hinein und aus diesen heraus verfahrbar. Innerhalb der Ausnehmungen 26 sind Federn 26', 26'' vorgesehen, die das jeweilige Stützelement 22 in seine aus der zugehörigen Ausnehmung 26 herausragende Position vorspannen. Der Vorformling liegt auf den an der Oberseite der Stützelemente 22 ausgebildeten Abstützflächen 23 auf und wird dabei so abgestützt, daß er nicht in Berührung mit der Wandung des unteren Formteils 2 im Bereich des Formungsabschnitts 20 gerät, wenn die Blasform 1 geöffnet ist. An seinen seitlichen oberen Enden ist jedes Stützelement mit Betätigungsflächen 24, 25 (siehe Fig. 4) versehen, die mit der Teilungsfläche 31 des oberen Formteils 3 beim Schließen der Blasform 1 in Berührung geraten können.

In den Endbereichen 20', 20'' des Formungsabschnitts 20, ebenso wie in den zugeordneten Endbereichen des Formungsabschnitts 30, von denen in Fig. 3 nur der Endbereich 30' gezeigt ist, wird der Butzen 55 bzw. 54 ausgebildet. In Fig. 3 sind klingenartige Quetschkanten 21', 31' gezeigt, die die teilungsflächenseitige Begrenzung des Formungsabschnitts 20 bzw. 30 im Bereich des einen Endes des Formungsabschnitts 20 bzw. 30 bilden.

Im Bereich 20' des Endes des Formungsabschnitts 20 ist zudem eine Vorrichtung 7 schematisch dargestellt, die eine in einer Bohrung 70 im unteren Formteil 2 axial verschiebbare Blasnadel 71 in den Endbereich 20' des Formungsabschnitts 20 im wesentlichen schräg bezüglich der Längserstreckung des Vorformlings hinein- und aus diesem herausfahren kann. Die Blasnadel 71 ist an ihrem in den Endbereich 20' einfahrbaren Ende mit einer Spitze 72 versehen, die die Wandung des Vorformlings 4 durchstoßen kann. Die Blasnadel 71 ist hohl ausgebildet und mit einer Druckluftquelle verbunden.

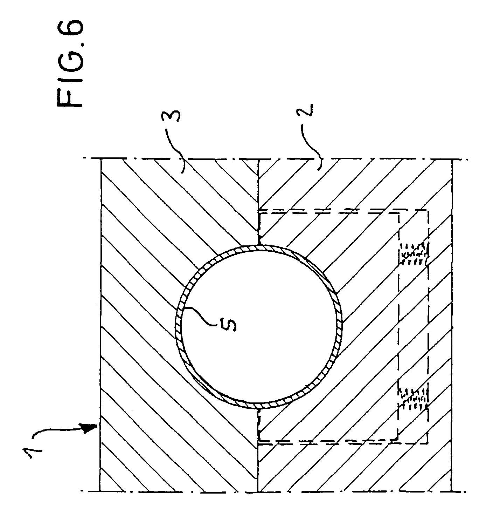

Die Arbeitsweise der erfindungsgemäßen Blasform 1 wird nun anhand der Figuren 4 bis 6 erläutert. Zunächst wird in die offene Blasform 1 der Vorformling 4, der aus einem extrudierten, noch extrusionswarmen Kunststoffschlauch besteht, eingelegt, wobei er auf den Abstützflächen 23 der Stützelemente 22 im unteren Formteil 2 bereichsweise zu liegen kommt. Der Vorformling 4 kann entweder bereits in der in Fig. 2 dargestellten Grundrißform des Formungsabschnitts 20 gebogen sein oder von einer nicht gezeigten Verlegevorrichtung beim Einlegen in die Blasform 1 in die in Fig. 2 gezeigte Grundrißform gebracht werden.

Die Blasform 1 wird nun durch Herabfahren des oberen Formteils 3 auf das untere Formteil 2 geschlossen, wobei die Teilungsfläche 31 des oberen Formteils 3 kurz vor dem Schließen der Blasform 1 in Berührung mit den Betätigungsflächen 24 und 25 der Stützelemente 22 gerät und beim weiteren Herabfahren die Stützelemente 22 gegen die Kraft der Federn 26', 26'' in die jeweils zugeordnete Ausnehmung 26 im unteren Formteil 2 (in Fig. 4 nach unten) hineinbewegt, bis die Blasform 1 geschlossen ist. Dieser geschlossene Zustand der Blasform 1 ist in Fig. 5 wiedergegeben, in welcher auch die Schließrichtung X mit einem Pfeil bezeichnet ist. Im geschlossenen Zustand der Blasform 1 sind die Stützelemente 22 soweit in ihre jeweilige Ausnehmung 26 eingefahren, daß die Abstützfläche 23 eines jeden Stützelements 22 im wesentlichen mit der Kontur des Formungsabschnitts 20 fluchtet. Der vorher (Fig. 4) vom Formungsabschnitt 20 beabstandete Vorformling 4 liegt nun im geschlossenen Zustand der Blasform 1 (Fig. 5) auf dem Formungsabschnitt 20 auf. Beim Schließen der Blasform werden die an den Längsenden des Vorformlings 4 überstehenden Endabschnitte 40, 41 mittels der Quetschkanten 21', 31' bzw. der nicht gezeigten Quetschkanten am anderen Ende der Formungsabschnitte 20, 30 vom Vorformling abgetrennt und der Vorformling wird an der Berührungsstelle der Quetschkanten 21', 31' im wesentlichen luftdicht verschlossen, da er noch warm und damit verschweißbar ist.

In das auf diese Weise geschlossene Gebilde des Vorformling 4 wird anschließend die Nadel 71 eingetrieben, wobei deren Spitze 72 die Wandung des Vorformlings 4 durchdringt. Durch die Nadel 71 wird dann Druckluft in den noch warmen und somit verformbaren Vorformling 4 eingeblasen, so daß dieser sich ausdehnt und an der Innenumfangskontur der durch die Formungsabschnitte 20, 30 gebildete Negativform zur Anlage kommt, wobei auch die besonders ausgestalteten Enden 50, 51 sowie die flexiblen Abschnitte 52, 53 des so gebildeten Formkörpers problemlos ausgeprägt werden. Da der noch extrusionswarme Vorformling 4 bis zum Schließen der Blasform 1 auf den wärmeisolierend ausgebildeten Stützelementen 22, die beispielsweise aus Polytetrafluoräthylen (PTFE) gebildet sind, aufliegt, kühlt er sich nämlich bis zum Schließen der Blasform nur unwesentlich ab und bleibt auf diese Weise besonders gut verformbar, was insbesondere für die Ausbildung der flexiblen Abschnitte 52, 53 wesentlich ist. Zur Verbesserung des Formungsergebnisses kann, falls dies erforderlich ist, ein besonderer Abschnitt 6, wie im besonderen Bereich 28, 29 bzw. 38, 39 der gezeigten Blasform 1, zusätzlich beheizt werden.

Die Formteile 2, 3 sind üblicherweise aus einem Metall wie Aluminium oder Stahl gebildet. Die besonders auszuformenden Bereiche 27, 27', 28, 29, 37, 38, 39 können aus einem anderen Werkstoff wie beispielsweise Messing oder Rotguß bestehen und jeweils in einem auswechselbaren Einsatzblock vorgesehen sein, der in eine entsprechende Ausnehmung im zugehörigen Formteil 2, 3 einsetzbar ist. Die Materialkombination zwischen dem Material des Formteils und dem Material des jeweiligen Einsatzes wird vorzugsweise so gewählt, daß trotz im wesentlichen spielfreier Passung eine gute Gleitfähigkeit zwischen den einzelnen Materialien gegeben ist, so daß die Einsätze problemlos in die entsprechenden Ausnehmungen eingesetzt und aus diesen auch nach Ende der Fertigung wieder herausgenommen werden können.

### BEZUGSZEICHENLISTE

- 1: Blasform
- 2: Erster, unterer Formteil
- 3: Zweiter, oberer Formteil
- 4: Vorformling
- 5: Formkörper
- 6: Beheizter Bereich
- 7: Vorrichtung
- 20: Formungsabschnitt
- 20': Bereich
- 20'': Bereich
- 21: Teilungsfläche
- 21': Quetschkante
- 22: Stützelement
- 23: Abstützfläche
- 24: Betätigungsfläche
- 25: Betätigungsfläche
- 26: Ausnehmung
- 26': Feder
- 26'': Feder
- 27: Besonderer Bereich
- 27': Besonderer Bereich
- 28: Besonderer Bereich
- 29: Besonderer Bereich
- 30: Formungsabschnitt
- 30': Bereich
- 31: Teilungsfläche
- 31': Quetschkante
- 37: Besonderer Bereich
- 38: Besonderer Bereich
- 39: Besonderer Bereich
- 40: Ende
- 41: Ende
- 50: Ende
- 50': Abschnitt mit vergrößertem Durchmesser
- 50'': Abschnitt mit vergrößertem Durchmesser
- 51: Ende
- 51': Abschnitt mit vergrößertem Durchmesser
- 51'': Abschnitt mit vergrößertem Durchmesser
- 52: Flexibler Abschnitt
- 53: Flexibler Abschnitt
- 54: Butzen
- 55: Butzen
- 56: Hauptabschnitt
- 70: Bohrung
- 71: Blasnadel
- 72: Spitze

## Patentansprüche

1. Verfahren zum Blasformen eines sich zumindest abschnittsweise im wesentlichen horizontal in einer Blasform (1) erstreckenden, noch extrusionswarmen Vorformlings (4), bei dem
- der Vorformling (4) in die geöffnete Blasform (1) eingelegt wird,
- die Blasform (1) durch Aufeinanderzufahren ihrer Formteile (2, 3) geschlossen wird,
- der Vorformling (4) innerhalb der Blasform (1) aufgeblasen wird,
- die Blasform (1) durch Auseinanderfahren ihrer Formteile (2, 3) geöffnet wird und
- der fertige Formkörper (5) entnommen wird
- wobei der Vorformling (4) während des Einlegens und des Schließens der Blasform (1) von der Wandung der Blasform (1) beabstandet gehalten wird, bis die Blasform (1) geschlossen ist.

2. Blasform, insbesondere zur Durchführung des Verfahrens nach Anspruch 1, mit
- einem ersten Formteil (2) und einem zweiten Formteil (3), die jeweils mit einem Formungsabschnitt (20, 30) versehen sind und die jeweils eine Teilungsfläche (21, 31) aufweisen, wobei die Teilungsflächen (21, 31) angeordnet sind, um einander im geschlossenen Zustand der Blasform (1) zu berühren, und
- Bewegungs- und Haltemitteln, um die Formteile (2, 3) zwischen einer geöffneten Stellung der Blasform (1) und der geschlossenen Stellung zu verfahren und in der geschlossenen Stellung gegeneinander zu halten, wobei
- in zumindest einem Formteil (2) im Bereich des Formungsabschnitts (20) wenigstens ein im wesentlichen quer zur Teilungsebene (21) verfahrbares Stützelement (22) für den Vorformling (4) vorgesehen ist.

3. Blasform nach Anspruch 2, wobei das wenigstens eine Stützelement (22) zumindest im Bereich seiner Abstützfläche (23) für den Vorformling (4) aus wärmeisolierndem Material besteht.

4. Blasform nach Anspruch 2 oder 3, wobei das wenigstens eine Stützelement (22) im zugehörigen Formteil (2) federnd gelagert ist.

5. Blasform nach einem der Ansprüche 2 bis 4, wobei das wenigstens eine Stützelement (22) Betätigungsflächen (24, 25) aufweist, die zum Eingriff mit dem anderen Formteil (3) ausgebildet sind, um das Stützelement (22) beim Schließen der Blasform (1) in eine zugehörige Ausnehmung (26) im das Stützelement (22) aufweisenden Formteil (2) zu verfahren.

6. Blasform nach einem der Ansprüche 2 bis 4, wobei das wenigstens eine Stützelement (22) hydraulisch oder pneumatisch in eine Ausnehmung (26) im zugehörigen Formteil (2) verfahrbar ist.

7. Blasform nach einem der Ansprüche 2 bis 4, wobei das wenigstens eine Stützelement (22) mechanisch oder elektromechanisch in eine Ausnehmung (26) im zugehörigen Formteil (2) verfahrbar ist.

8. Blasform nach einem der vorhergehenden Ansprüche, wobei eine Mehrzahl von Stützelementen (22) vorgesehen ist, die in Längsrichtung des Formungsabschnitts (20) voneinander beabstandet sind.

9. Blasform nach einem der vorhergehenden Ansprüche, wobeiHeizmittel vorgesehen sind, um zumindest einen Formteil (2, 3) zumindest in einem Bereich (6) des Formungsabschnitts (20, 30) zu beheizen, der für eine besondere Verformung des Vorformlings (4) ausgebildet ist.

10. Blasform nach einem der vorhergehenden Ansprüche, wobei das jeweilige Stützelement (22) als im wesentlichen U-förmiger Auflagesteg ausgebildet ist.
